# EUROPÄISCHE PATENTANMELDUNG

(11) **EP 2 092 973 A1**
(43) Veröffentlichungstag der Anmeldung: **26.08.2009**
(21) Anmeldenummer: 08003404.4
(22) Anmeldetag: 25.02.2008
(51) Int. Cl.: B01D 53/62, C01B 31/20

(54) **Verfahren zur Verdichtung von Kohlenstoffdioxid oder eines ähnliche Eigenschaften aufweisenden Gases**

(71) Anmelder: SIEMENS AKTIENGESELLSCHAFT, 80333 München (DE)
(72) Erfinder: Mönk, Thomas, Dr., 45896 Gelsenkirchen (DE); Nölke, Marcus, 40878 Ratingen (DE); Schlüter, Lars, 47445 Moers (DE)

(57) **Zusammenfassung**

Kohlenstoffdioxid wird in einem mehrstufigen Getriebe-Verdichter mittels eines im Wesentlichen isothermen Prozesses auf einen Druck verdichtet, welcher oberhalb des Drucks des kritischen Punktes von Kohlenstoffdioxid liegt. Danach wird das Kohlenstoffdioxid in einer Kühlvorrichtung auf Umgebungstemperatur abgekühlt und dann in einer Pumpeinrichtung auf einen vorgegebenen Enddruck verdichtet.

## Beschreibung

Kohlenstoffdioxid entsteht bei der Verbrennung von kohlenstoffhaltigen Brennstoffen. Bei einem gegebenen Energieträger ist die Menge des erzeugten Kohlenstoffdioxids direkt von der Menge des Brennstoffs und damit der umgesetzten Energie abhängig. Moderne Anlagen und Betriebsverfahren können zwar die im Brennstoff enthaltene Energie besser nutzen als früher, aber die Entstehung des Gases nicht verhindern.

Da noch kein wirksames und wirtschaftliches Verfahren zur Kohlenstoffdioxidabtrennung zur Verfügung steht, entweicht diese Menge in die Atmosphäre und trägt zur globalen Erwärmung bei. Um zu vermeiden, dass Kohlenstoffdioxid in die Atmosphäre gelangt, ist es bekannt, Kohlenstoffdioxid in Hohlräume tief unter der Erdoberfläche einzulagern. So wird in der Nordsee seit Jahren Klimagas in Gesteinsschichten tief unter den Meeresgrund gepumpt.

Hierzu muss Kohlenstoffdioxid von Umgebungsdruck und - temperatur auf ein Druckniveau gebracht werden, dass ein Einbringen des Gases über Pipelines in eine unterirdische Lagerstätte erlaubt.

Dies bedeutet, dass eine Verdichtungseinheit für das Kohlenstoffdioxid einen Enddruck von 170 - 200 bar liefern muss.

Hierzu wird eine entsprechend große Leistung benötigt.

Aufgabe der Erfindung ist es, ein Verfahren zur Verdichtung von Kohlenstoffdioxid oder eines ähnliche Eigenschaften aufweisenden Gases anzugeben, bei welchem eine möglichst geringe Leistung benötigt wird.

Diese Aufgabe wird für ein Verfahren der eingangs genannten Art dadurch gelöst, dass das Kohlenstoffdioxid in einem mehrstufigen Getriebeverdichter mittels eines im wesentlichen isothermen Prozesses auf einen Druck verdichtet wird, welcher oberhalb des Drucks des kritischen Punktes von Kohlenstoffdioxid liegt, dass das Kohlenstoffdioxid danach in einer Kühlvorrichtung auf Umgebungstemperatur abgekühlt wird und dann in einer Pumpeinrichtung auf einen vorgegebenen Enddruck verdichtet wird.

Bei dem erfindungsgemäßen Verfahren wird der Enddruck durch den kombinierten Einsatz von Turbo-Verdichter und Pumpeinrichtung erreicht. Der Turbo-Verdichter komprimiert das Gas von Umgebungsbedingungen auf einen vorläufigen Enddruck von 80 - 90 bar. Dabei bewegt sich der erfindungsgemäße Prozess nah an einem isothermen Prozess. Am Ausgang des TurboVerdichters beträgt die Temperatur des Gases dann ca. 120 - 140° C. Durch gezieltes Rückkühlen des Kohlenstoffdioxids bei 80 - 90 bar auf ein Temperaturniveau von 10 - 30° C erreicht man einen Zustand von Kohlenstoffdioxid, in welchem die Dichte nahe der Dichte einer typischen Flüssigkeit liegt. Das in diesem Zustand vorliegende Kohlenstoffdioxid kann dann mit Hilfe von Pumpen auf einen gewünschten Enddruck von bis zu 400 bar gebracht werden. Der Energieaufwand für die Pumpe ist dabei in der Regel deutlich niedriger als eine vergleichbare Verdichtung mit einem Turbo-Verdichter.

Würde man den geforderten Enddruck von 200 bar nicht mit einer Pumpe, sondern mit einem Verdichter anderen Typs, z.B. mit einem Einwellenverdichter durchführen, würde man ungefähr 10 % mehr Leistung benötigen und hätte das Kohlenstoffdioxid bei einer für die Pipeline viel zu hohen Temperatur vorliegen. Dann wäre ein zusätzlicher Nachkühler erforderlich.

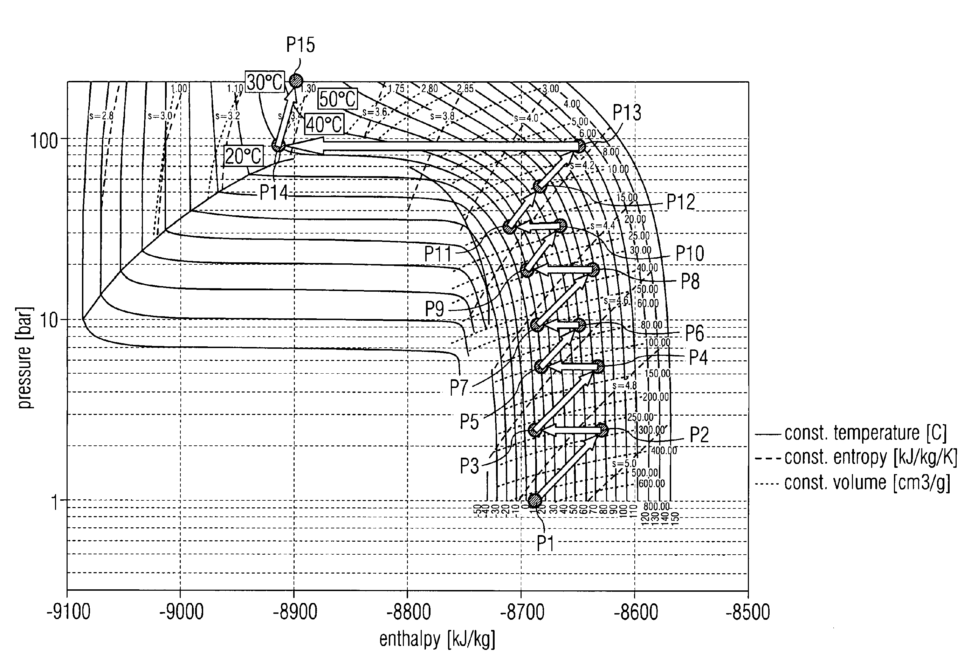

Nachstehend soll das erfindungsgemäße Verfahren anhand eines in der Zeichnung dargestellten Druck-Enthalpy-Diagramms näher beschrieben werden.

In dem dargestellten Druck-Enthalpy-Diagramm ist in Form von Pfeilen und Punkten die Verfahrenskennlinie des erfindungsgemäßen Verfahrens dargestellt.

Am Anfang des Verfahrens im Punkt P1 befindet sich das zu verdichtende Kohlenstoffdioxid unter Umgebungstemperaturen. Im Getriebe im Turbo-Verdichter bzw. im Getriebe-Verdichter wird das Kohlenstoffdioxid von Umgebungsdruck im Punkt P1 auf ca. 90 bar im Punkt P13 komprimiert. Dabei wird - bis auf die letzte Stufe - nach jeder Verdichtungsstufe zurückgekühlt, um dem isothermen Verdichtungsprozess Rechnung zu tragen.

D.h. zwischen den Punkten P1 und P2, P3 und P4, P5 und P6, P7 und P8, P9 und P10, P11 und P13 findet jeweils eine Verdichtung des Kohlenstoffdioxids statt. Dazwischen findet jeweils zwischen den Punkten P2 und P3, P4 und P5, P6 und P7, P8 und P9, P10 und P11 eine Zurückkühlung des Kohlenstoffdioxids auf jeweils konstantem Druckniveau statt. Trotz dieses mehrfachen Rückkühlens beträgt die Temperatur am Austritt des Getriebe-Verdichters ca. 120° C.

Danach wird in einer besonderen Kühlvorrichtung das Kohlenstoffdioxid von 120° C auf 30° C zurückgekühlt, dargestellt durch den Pfeil zwischen P13 und P14. Dabei steigt die Dichte des Kohlenstoffdioxids deutlich an und erreicht eine Dichte von ca. 750 kg/m³. Damit besitzt das überkritische Kohlenstoffdioxid bzw. das überkritische Gas eine Dichte vergleichbar der Dichte einer Flüssigkeit und kann nahezu inkompressibel gepumpt werden. Dadurch ist der Energieaufwand zum Pumpen auf 200 bar Enddruck verhältnismäßig gering.

Das besondere des erfindungsgemäßen Verfahrens ist das Verdichten um den kritischen Punkt herum, wodurch auf ein Kondensieren und auf eine 2-Phasen-Strömung verzichtet wird. Der kritische Punkt für Kohlenstoffdioxid liegt bei 74 bar und 31° C. Dem Druck-Enthalpy-Diagramm lässt sich entnehmen, dass die Verfahrenskennlinie des erfindungsgemäßen Verfahrens über dem kritischen Punkt für Kohlenstoffdioxid verläuft.

## Patentansprüche

1. Verfahren zur Verdichtung von Kohlenstoffdioxid oder eines ähnliche Eigenschaften aufweisenden Gases, **dadurch gekennzeichnet, dass** das Kohlenstoffdioxid in einem mehrstufigen Getriebe-Verdichter mittels eines im wesentlichen isothermen Prozesses auf einen Druck verdichtet wird, welcher oberhalb des Drucks des kritischen Punktes von Kohlenstoffdioxid liegt, dass das Kohlenstoffdioxid danach in einer Kühlvorrichtung auf Umgebungstemperatur abgekühlt wird und dann in einer Pumpeinrichtung auf einen vorgegebenen Enddruck verdichtet wird.
